## Europäisches Patentamt
## European Patent Office
## Office européen des brevets

(19)

(11) Numéro de publication : **0 078 213**
**B1**

(12)

# FASCICULE DE BREVET EUROPÉEN

(45) Date de publication du fascicule du brevet :
22.01.86

(21) Numéro de dépôt : **82401953.3**

(22) Date de dépôt : **22.10.82**

(51) Int. Cl.⁴ : **H 01 B 13/14, G 02 B 6/04,
B 29 C 47/12**

(54) **Dispositif de fabrication d'un jonc cylindrique à rainures hélicoïdales notamment pour fibres optiques.**

(30) Priorité : **28.10.81 FR 8120203**

(43) Date de publication de la demande :
**04.05.83 Bulletin 83/18**

(45) Mention de la délivrance du brevet :
**22.01.86 Bulletin 86/04**

(84) Etats contractants désignés :
**BE CH DE GB IT LI NL SE**

(56) Documents cités :
**EP-A- 0 011 539
FR-A- 1 002 545
US-A- 2 521 123
US-A- 4 154 049**

(73) Titulaire : **SOCIETE ANONYME DE TELECOMMUNI-
CATIONS
41, rue Cantagrel
F-75624 Paris Cedex 13 (FR)**

**SOCIETE INDUSTRIELLE DE LIAISONS ELECTRI-
QUES - SILEC
64 bis, rue de Monceau
F-75008 Paris (FR)**

(72) Inventeur : **Missout, Bernard Michel
29, avenue Lénine
F-94110 Arcueil (FR)**

(74) Mandataire : **Martinet & Lapoux
62, rue des Mathurins
F-75008 Paris (FR)**

EP 0 078 213 B1

Jouve, 18, rue St-Denis, 75001 Paris, France

## Description

La présente invention concerne la fabrication d'un jonc cylindrique rainuré par extrusion. Un tel jonc est destiné notamment à constituer l'âme rainurée d'un câble à fibres optiques dont les rainures sont hélicoïdales et contiennent chacune une fibre optique.

L'invention concerne plus particulièrement un dispositif de fabrication conforme au préambule de la revendication 1.

Un tel dispositif pour fabriquer un tube en caoutchouc ayant des filets hélicoïdaux périphériques est décrit dans le brevet français FR-A-1 002 545. L'unique extrudeuse a sa vis d'extrusion centrée axialement en arrière du poinçon qui est logé dans l'alésage conique d'une première filière où la matière d'extrusion est poussée par l'extrudeuse. La première filière est fixe en rotation et translation. La petite base de la filière fixe est un petit alésage cylindrique qui détermine le diamètre externe du jonc à obtenir, y compris les rainures. L'alésage cylindrique de la filière fixe est prolongé axialement par l'alésage cylindrique rainuré de faible longueur, d'une seconde filière qui est tournante autour du poinçon. L'alésage cylindrique de la filière tournante est creusé de canaux afin de creuser des rainures dans le jonc à pourtour parfaitement cylindrique sortant de la filière fixe et de rendre hélicoïdales les rainures du jonc par rotation de la seconde filière.

Dans ce dispositif, le jonc rainuré est obtenu en deux étapes séparées. La première étape consiste à obtenir un jonc cylindrique sans rainure dans la filière fixe et la seconde étape consiste à creuser des rainures dans la matière encore malléable du jonc cylindrique au moyen de la filière tournante. Ceci présente pratiquement les inconvénients suivants. Le profil rainuré du jonc est grossièrement calibré du fait que la filière tournante travaille par repoussée de la matière sensiblement refroidie. Des pressions élevées sont exercées sur la filière tournante et notamment à la jonction entre l'alésage cylindrique de la filière fixe et de l'alésage creusé de canaux de la filière tournante ce qui peut induire des problèmes d'étanchéité, tels que la remontée et l'échappement de matière entre les deux filières. En outre, ces problèmes d'étanchéité sont accrus par le montage même de la filière tournante qui est logée dans l'avant du dispositif par l'intermédiaire d'un roulement à galets logé en arrière de la filière tournante et autour d'un bossage du bâti du dispositif. A l'usage, un jeu notable peut exister entre les deux filières, ce qui diminue encore la précision du calibrage souhaité.

La présente invention vise principalement à obvier aux inconvénients précédents et notamment à obtenir un jonc rainuré parfaitement calibré en une seule étape qui remédie aux principaux problèmes d'étanchéité dans le dispositif de fabrication.

A cette fin, le dispositif de fabrication d'un jonc cylindrique ayant des rainures périphériques hélicoïdales est tel que caractérisé dans la revendication 1. Cette caractéristique permet ainsi d'éviter toute remontée de matière d'extrusion entre les moyens de guidage de matière d'extrusion et les canaux de la filière.

La solution aux problèmes d'étanchéité est complétée au niveau du montage de la filière tournante, par les dispositions formulées dans la revendication dépendante 3.

Selon un autre aspect de l'invention, l'invention vise à repérer les fibres optiques contenues dans les rainures d'un jonc fabriqué selon l'invention. Le repérage est obtenu par l'alimentation de canaux prédéterminés de la filière tournante par la matière d'extrusion colorée d'une extrudeuse auxiliaire ou les matières d'extrusion colorées de plusieurs extrudeuses respectives afin de colorer un filet ou plusieurs filets respectifs entre rainures de jonc.

D'autres caractéristiques et avantages de l'invention apparaîtront plus clairement à la lecture de la description suivante de plusieurs modes de réalisation du dispositif de fabrication et du jonc rainuré en référence aux dessins annexés correspondants dans lesquels :

la Figure 1 est une vue en perspective d'un jonc à rainures hélicoïdales ayant trois filets colorés ;

la Figure 2 est un diagramme schématique de la chaîne de fabrication du jonc ;

la Figure 3 est une vue en coupe axiale du dispositif de fabrication par extrusion du jonc ;

la Figure 4 est une vue en coupe axiale détaillée de la partie avant du dispositif de fabrication comprenant la filière monobloc tournante ; et

la Figure 5 est une vue en perspective d'une filière monobloc tournante ayant des canaux hélicoïdaux.

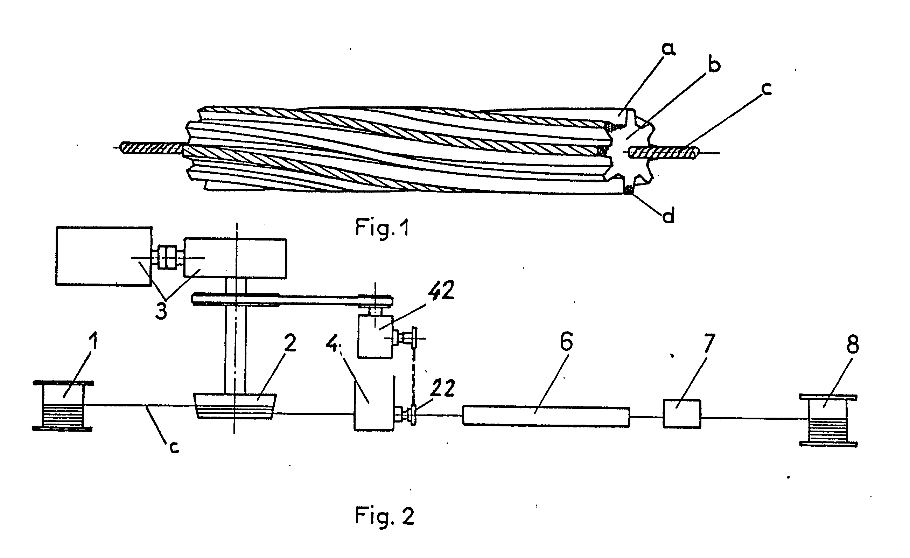

Le mode de réalisation du dispositif de fabrication décrit ci-après est destiné à l'obtention d'un jonc à rainures périphériques hélicoïdales pour câble à fibres optiques tel que décrit dans le brevet français FR-B-2 312 788. Le jonc est montré à la Fig. 1. Il présente une structure b à profil général cylindrique qui est renforcée axialement par un élément central de traction c. L'élément c est constitué par une armature telle qu'un fil métallique ou un toron de fils métalliques torsadés. A la périphérie de la structure b du jonc sont équiréparties des rainures a qui ont des dimensions judicieusement choisies comme décrit dans le FR-B-2 312 788. D'une manière générale, la section des rainures peut être semi-circulaire, en vé, trapézoïdale ou carrée. Les rainures a sont hélicoïdales afin que la tension moyenne des fibres optiques logées dans les rainures soit nulle lors des différentes courbures imposées au câble au cours de sa fabrication et pendant sa pose notamment.

La Fig. 2 représente schématiquement la chaîne de fabrication d'un tel jonc. La chaîne de fabrication comporte une bobine 1 qui laisse filer l'armature c et qui est suivie d'un cabestan 2 autour duquel est entourée l'armature c. Le cabestan est entraîné en rotation au moyen d'un groupe motoréducteur 3 déterminant la vitesse d'avance dans la chaîne. Puis l'armature c passe dans le dispositif de fabrication 4 selon l'invention où elle est entourée par extrusion par la structure cylindrique b à rainures hélicoïdales. La ou les extrudeuses incluses dans le dispositif de fabrication 4 sont également asservies en vitesse à celle imposée par le groupe motoréducteur 3.

Le jonc rainuré est refroidi à sa sortie du dispositif 4 dans une goulotte de refroidissement 6 avant d'être mesuré au moyen d'un appareil de contrôle de diamètre 7 et être réceptionné sur une bobine 8. L'invention consiste ainsi essentiellement à obtenir les rainures a pendant la phase d'extrusion au moyen du dispositif de fabrication 4.

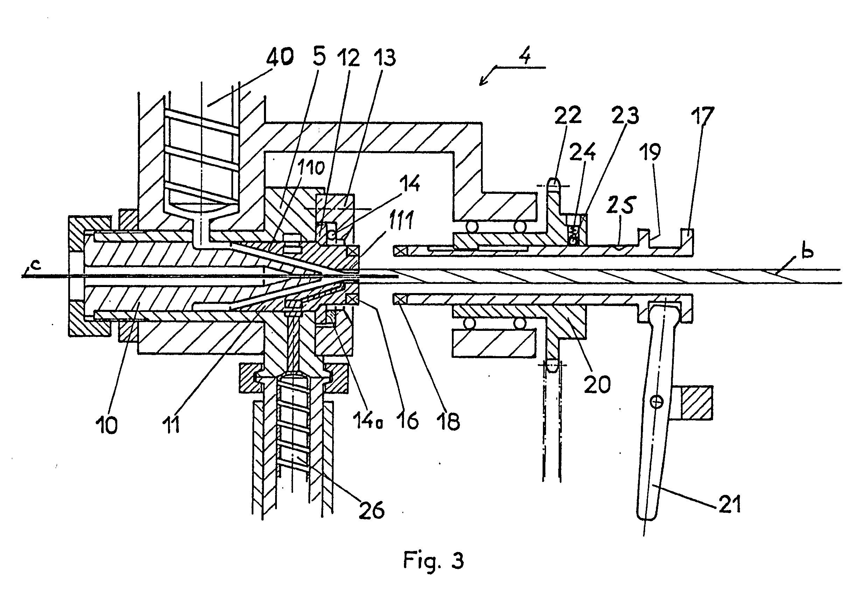

En référence à la Fig. 3, le dispositif de fabrication 4 comprend une extrudeuse principale 40 dont la vis d'extrusion est orthogonale à la ligne d'extrusion qui est matérialisée par l'armature c fournie par le cabestan 2.

L'extrudeuse 40 est équipée d'une tête d'équerre 5 entourant un poinçon axial creux 10 à travers lequel est guidée l'armature c. Une unique filière monobloc 11 est montée tournante autour de l'armature c à l'avant du poinçon 10. La filière 11 est maintenue à une distance fixe du poinçon 10 au moyen d'une rondelle d'appui 12 à portée sphérique qui reçoit en arrière un épaulement sphérique de la filière 11 et qui est maintenue devant la face avant de la tête d'équerre 5 par une bague à chambrage 13 fixée sur ladite face avant. Comme la matière extrudée exerce une poussée très importante sur la filière 11, poussée supportée par la bague 13, une butée à billes 14 est intercalée entre la rondelle 12 et la bague 13, comme montré en haut de la Fig. 3. Ceci permet de diminuer considérablement l'effet de poussée de la matière extrudée et donc de réduire également le couple d'entraînement de la filière. Le contact sphérique de la rondelle 12 avec la filière 11 tournante assure une excellente étanchéité.

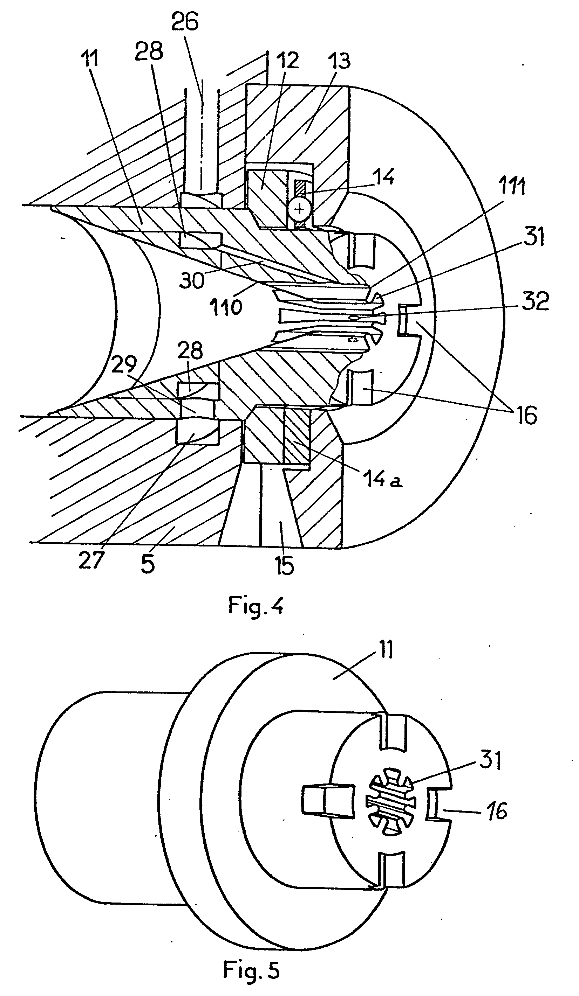

Les conditions de température et de pression, bien connues de l'homme du métier, sont telles qu'il est très difficile d'assurer en même temps une liberté de rotation et une étanchéité satisfaisante. Comme montré en bas de la Fig. 3, la butée à billes 14 peut être remplacée par une rondelle ou butée 14a en matériau autolubrifiant, en graphite par exemple. La rondelle 14a est capable de supporter les conditions de température et de pression, et grâce à son bon coefficient de frottement, elle réduit les contraintes au niveau des surfaces de contact des pièces 12, 13 et 14a. Ainsi la rotation n'a lieu qu'entre les rondelles 12 et 14a ce qui entraîne un glaçage continu des surfaces en contact et une étanchéité vers l'avant satisfaisante. Un orifice 15 représenté sur la Fig. 4 est prévu sous la rondelle 12 entre la face avant de la tête d'équerre 5 et la bague 13 et permet d'évacuer les fuites éventuelles de matière d'extrusion.

La filière 11 peut être entraînée en rotation suivant les deux directions de diverses manières, soit par un entraîneur, soit par un pignon, soit par une courroie extérieure.

La Fig. 3 montre des moyens tournants moteurs sous la forme d'un entraîneur qui est solidaire en rotation d'un pignon 22 et qui est constitué par un tube 17 ayant à l'arrière des encoches et des dents 18 propres à coopérer avec des dents et encoches 16 complémentaires régulièrement réparties sur la face avant de la filière 11. Le tube creux 17 coulisse le long de l'axe de la ligne d'extrusion devant la face avant de la filière 11, afin que ses dents 18 puissent engrener dans les encoches 16. Le tube 17 coulisse dans le moyeu 20 du pignon 22 et est solidaire de celui-ci en rotation. Le coulissement du tube 17 le long de l'axe de la ligne d'extrusion est commandé en manœuvrant un levier 21 dont l'extrémité est engagée dans une gorge périphérique avant 19 du tube 17. Le pignon 22 assure la rotation du tube 17 dès que le cabestan 2 est mis en marche.

Après avoir procédé aux divers réglages de l'extrudeuse 40, notamment à l'établissement de la température et au réglage du débit de la matière d'extrusion, le tube 17 est coulissé vers l'arrière en actionnant le levier 21 afin d'emboîter les dents 18 dans les encoches 16 et de rendre solidaire la filière 11 du tube 17. La filière 11 est entraînée en rotation par le tube 17 qui est verrouillé en translation axiale dans cette position par une bille 23 qui est poussée dans un petit évidement 25 du tube 17 par un ressort radial 24 logé dans le moyeu 20.

La Fig. 4 représente une vue détaillée de la filière 11 équipée de la rondelle 12, de la butée 14 ou 14a ainsi que de la bague 13. La filière tournante 11 comporte une cavité tronconique 110 qui est alimentée par la matière d'extrusion fournie par l'extrudeuse 40. La cavité 110 entoure l'extrémité externe conique du poinçon 10 et est directement prolongée axialement par un alésage avant 111 à canaux longitudinaux 31. Les canaux 31, par exemple au nombre de huit sont pratiqués dans l'alésage cylindrique avant 111 de la filière 11 qui est entouré par l'ensemble des pièces 12, 13, 14 ou 14a. Les canaux 31 sont parallèles à l'axe de révolution de la filière 11 sur une longueur prédéterminée en vue de ne pas arracher les rainures a et de former un jonc parfaitement calibré b. Les dimensions de la section des canaux 31 de la filière déterminent les dimensions de la section des rainures a du jonc. Le nombre des canaux 31 et leur pas déterminent ceux des rainures a du jonc b.

La vitesse de rotation du pignon 22 (Fig. 3) qui est asservie à la vitesse linéaire du cabestan 2 (Fig. 2), détermine le pas de l'hélice des rainures a. Ce pas peut être ajusté en intercalant un variateur de vitesse mécanique 42 entre le cabestan 2 et le poinçon 22, comme montré à la Fig. 2. Tout autre moyen d'asservissement de vitesse peut être également utilisé tel qu'un asservissement électrique commandant des moteurs.

La fabrication des rainures a au moyen de l'unique filière tournante comportant des canaux confère avantageusement des parfaites régularité et répartition des rainures et une simplicité de fabrication. Elle permet également le repérage des rainures.

On sait que les rainures servent chacune de réceptacle à une fibre optique. La présente invention vise également à faciliter le repérage des rainures, c'est-à-dire des filets entre rainures, à défaut de repérage des fibres. L'extrusion de jonc à rainures helicoïdales au moyen de la filière tournante telle que décrite ci-dessus permet également un repérage des rainures du jonc et donc des fibres, moyennant l'emploi d'au moins une extrudeuse auxiliaire, comme montré aux Figs. 3 et 4.

L'extrudeuse auxiliaire 26 injecte une matière colorée dans une gorge annulaire 27 qui est pratiquée dans la tête d'équerre 5. La matière extrudée par l'extrudeuse auxiliaire 26 est différente de celle de l'extrudeuse principale 40. L'extrudeuse auxiliaire 26 est de préférence disposée perpendiculaire à l'axe de la filière 11 et débouche dans la gorge annulaire 27. Un trou 29 ayant une grandeur appropriée est pratiqué sur le corps de la filière 11. La matière colorée de l'extrudeuse auxiliaire 26 traverse le trou 29 et ensuite une cavité interne 28 et un nombre choisi de conduits internes 30 convergeant vers l'avant dans la filière 11. Chaque conduit 30 débouche par un trou 32 dans un canal respectif 31.

En pratique on choisit avantageusement trois conduits alimentant en matière colorée trois canaux respectifs 31.

Selon un autre aspect de l'invention on choisit une disposition de canaux 31 recevant la matière colorée telle qu'ils ne soient pas adjacents mais occupent des positions relatives comme celles par exemple des filets d entre des rainures qui sont hachurés dans la Fig. 1. Selon cet exemple, un premier canal et les troisième et quatrième canaux suivants en tournant dans le sens des aiguilles d'une montre reçoivent la matière colorée par des trous respectifs 32. Les filets d colorés permettent de la sorte un repérage des fibres au moyen d'une seule couleur.

Selon une autre caractérisitique de l'invention, on choisit plusieurs couleurs différentes. A cet effet, on dispose perpendiculairement à l'axe de la filière 11 plusieurs extrudeuses auxiliaires $26_1$ à $26_J$ qui extrudent chacune une matière de couleur prédétermiéne et différentes des autres. L'épaisseur de la matière colorée dans les filets colorés est réglée en agissant sur les vitesses des extrudeuses auxiliaires $26_1$ à $26_J$. Un asservissement de vitesse des moteurs des extrudeuses principales et auxiliaires permet de régulariser le débit de couleur au débit de matière extrudée. Chaque extrudeuse auxiliaire $26_j$ avec $1 \leqslant j \leqslant J$, pousse séparément dans une gorge annulaire respective $27_j$ individuelle la matière colorée respective qui traverse un trou respectif $29_j$, une cavité respective $28_j$ et un ou plusieurs conduits $30_j$, trous $32_j$ et canaux $31_j$ respectifs. Il y a autant d'ensembles $27_j$-$29_j$-$28_j$ que d'extrudeuses auxiliaires $26_j$.

La Fig. 5 représente un autre mode de réalisation de la filière tournante 11 selon l'invention dans laquelle les canaux 31 ne sont plus parallèles à l'axe de révolution de la filière 11 mais sont disposés en hélice sur la surface cylindrique interne 111 de la filière 11. Un tel mode de réalisation de filière à canaux hélicoïdaux est également compatible avec le repérage des rainures selon l'invention.

Il serait également possible de réaliser un jonc à hélice alternée bien connu de l'homme du métier. Il suffit alors d'inverser périodiquement le sens de rotation du pignon 22 au moyen d'un dispositif mécanique non représenté sur les figures. Le jonc alors présente des rainures hélicoïdales dont le sens des hélices est alterné à chaque tour ou chaque fraction de tour ou encore tous les m tours, l'entier m étant prédéterminé. Un tel mode de réalisation de jonc rainuré est toujours compatible avec le repérage au moyen d'extrudeuses auxiliaires débouchant sur une même filière tournante, chaque canal d'extrusion étant également susceptible d'être individualisé par une alimentation particulière de couleur souhaitée au moyen d'une extrudeuse auxiliaire individuelle.

## Revendications

1. Dispositif de fabrication d'un jonc cylindrique (b) ayant des rainures périphériques hélicoïdales (a), comprenant une extrudeuse principale (40), un poinçon (10), des moyens (110) autour du poinçon (10) pour guider une matière d'extrusion à partir de l'extrudeuse principale (40), et des moyens tournants ayant un alésage (111) creusé de canaux (31) et une section égale à celle du jonc rainuré (b), caractérisé en ce que les moyens de guidage de matière (110) et les moyens tournants (111) constituent une unique filière monobloc tournante (11).

2. Dispositif selon la revendication 1, caractérisé en ce que lesdits canaux (31) de la filière (11) sont disposés en hélice autour de l'axe de révolution de la filière (11) sur une longueur prédéterminée.

3. Dispositif selon la revendication 1 ou 2, caractérisé en ce que la poussée de matière d'extrusion exercée par l'extrudeuse principale (40) sur ladite filière (11) est supportée par une rondelle (12) entourant ladite filière (11), en contact avec celle-ci par des surfaces sphériques, et par une bague fixe (13) enveloppant la rondelle (12), fixée à une tête d'équerre (5) de l'extrudeuse principale (40).

4. Dispositif selon la revendication 3, caractérisé en ce qu'une butée à billes (14) est intercalée entre ladite rondelle (12) et ladite bague (13).

5. Dispositif selon la revendication 3, caractérisé en ce qu'une butée en matériau autolubrifiant (14a) est intercalée entre ladite rondelle (12) et ladite bague (13).

6. Dispositif selon l'une des revendications 1 à 5, caractérisé en ce qu'il comprend des moyens (17) moteurs tournant autour de l'axe de la filière (11) et coulissant le long de cet axe pour engrener avec la filière (11).

7. Dispositif selon la revendication 6, caractérisé en ce qu'il comprend des moyens de verouillage (23, 24, 25) du coulissement des moyens tournants et coulissants (17) à la position d'engrènement avec la filière (11).

8. Dispositif selon l'une des revendications 1 à 7, caractérisé en ce qu'il comprend une extrudeuse auxiliaire (26) dont la matière d'extrusion a une couleur différente de celle de l'extrudeuse principale (40) et alimente au moins un canal (31) de la filière (11) à travers un conduit (29, 28, 30) pratiqué dans la structure monobloc de ladite filière tournante.

9. Dispositif selon l'une des revendications 1 à 7, caractérisé en ce qu'il comprend plusieurs extrudeuses auxiliaires (26ⱼ) dont les matières d'extrusion ont des couleurs différentes entre elles et de celle de l'extrudeuse principale (40) et alimentent chacune au moins un canal respectif (31ⱼ) de la filière (11) à travers un conduit respectif (29ⱼ, 28ⱼ, 30ⱼ) pratiqué dans la structure monobloc de ladite filière tournante.

## Claims

1. A device for manufacturing a cylindrical ring (b) having helical peripheral grooves (a), comprising a main extruder (40), a tapered member (10), means (110) around the tapered member (10) for guiding an extrusion material from the main extruder (40), and rotating means having a bore (111) including channels (31) and having a cross section equal to that of the grooves core (b), characterized in that the material guiding means (110) and the rotating means (111) constitute a single rotating integral die (11).

2. Device according to claim 1, characterized in that said channel (31) in said die (11) are helically formed with respect to the die (11) axis of rotation over a predetermined length.

3. Device according to claim 1 or 2, characterized in that the extrusion material thrust exercized from the main extruder (40) on said die (11) is borne by a washer (12) encircling said die (11), in contact with the latter through spherical surfaces, and by a stationary collar (13) enveloping the washer (12), secured to an extruding head (5) of the main extruder (40).

4. Device according to claim 3, characterized in that a ball thrust-bearing (14) is interposed between said washer (12) and said collar (13).

5. Device according to claim 3, characterized in that a self-lubricating material bearing (140) is interposed between said washer (12) and said collar (13).

6. Device according to one of claims 1 to 5, characterized in that it comprises driving means (17) rotatable about the axis of the die (11) and sliding along this axis for engaging said die (11).

7. Device according to claim 6, characterized in that it comprises means (23, 24, 25) for locking the sliding of the sliding and rotating means (17) in engagement in the die (11).

8. Device according to one of claims 1 to 7, characterized in that it comprises an auxiliary extruder (26) the extrusion material of which has a colour different from that of the main extruder (40) and feeds at least one channel (31) in the die (11) via a conduit (29, 28, 30) within the integral body of said rotating die.

9. Device according to one of claims 1 to 7, characterized in that it comprises several auxiliary extruders (26ⱼ) the extrusion materials of which have different colours from each other and from that of the main extruder (40) and which each feed at least one respective channel (31ⱼ) in the die (11) via a respective conduit (29ⱼ, 28ⱼ, 30ⱼ) within the integral body of said rotating die.

## Patentansprüche

1. Einrichtung zur Herstellung eines zylindrischen Elementes (b) mit schraubenlinienförmigen Rinnen (a) an der Oberfläche, bestehend aus einem Hauptextruder (40), einem Dorn (10), den Dorn (10) umgebende Mittel (110) zur Führung der Extrusionsmasse aus dem Hauptextruder (40), und drehbaren Mitteln, die eine die Kanäle (31) vertiefende Bohrung (111), sowie einen dem Rinnenprofil des Elementes (b) entsprechenden Abschnitt aufweisen, dadurch gekennzeichnet, daß die Mittel (110) zur Führung der Extrusionsmasse und die drehbaren Mittel (111) ein einziges drehbares Spritzmundstück (11) bilden.

2. Einrichtung nach dem Anspruch 1, dadurch gekennzeichnet, daß die genannten Kanäle (31) des Spritzmundstückes (11) in Schraubenlinienform um die Umdrehungsachse des Spritzmundstückes (11) auf einer vorherbestimmten Länge angeordnet sind.

3. Einrichtung nach dem Anspruch 1 oder 2, dadurch gekennzeichnet, daß der durch den Hauptextruder (40) auf das genannte Spritzmundstück (11) ausgeübte Druck der Extrusionsmasse durch eine das Spritzmundstück (11) umgebende Scheibe (12), welche mit diesem über sphärische Flächen in Verbindung steht, und einen festen Ring (13) unterstützt wird, der die Scheibe (12) umschließt und an einem Querspritzkopf (5) des Hauptextruders (40) befestigt ist.

4. Einrichtung nach Anspruch 3, dadurch gekennzeichnet, daß ein Axialkugellager (14) zwischen der Scheibe (12) und dem Ring (13) vorgesehen ist.

5. Einrichtung nach Anspruch 3, dadurch gekennzeichnet, daß ein Lager aus einem selbstschmierenden Material (14 a) zwischen der Scheibe und dem Ring vorgesehen ist.

6. Einrichtung nach einem der Ansprüche 1 bis 5, gekennzeichnet durch um die Achse des Spritzmundstückes (11) drehbare Antriebsmittel (17), die entlang dieser Achse zum Eingriff mit dem Spritzmundstück (11) verschiebbar sind.

7. Einrichtung nach Anspruch 6, gekennzeichnet durch eine Rastvorrichtung (23, 24, 25) zum Verschieben der drehbaren und verschiebbaren Antriebsmittel (17) in die Positon des Eingriffs mit dem Spritzmundstück (11).

8. Einrichtung nach einem der Ansprüche 1 bis 7, gekennzeichnet durch einen Nebenextruder (26), dessen Extrusionsmasse eine unterschiedliche Farbe besitzt als diejenige des Hauptextruders (40), und der mindestens einen Kanal des Spritzmundstückes (11) über eine Speiseleitung (29, 28, 30) speist, welche in der Einblockkonstruktion des genannten drehbaren Spritzmundstückes vorgesehen ist.

9. Einrichtung nach einem der Ansprüche 1 bis 7, gekennzeichnet durch mehrere Nebenextruder $(26_j)$, deren Extrusionsmassen andere Farben haben als diejenige des Hauptextruders (40) und von denen jeder mindestens einen Kanal $(30_j)$ des Spritzmundstückes (11) über jeweils eine Speiseleitung $(29_j, 28_j, 30_j)$ speist, welche in der Einblockkonstruktion des genannten drehbaren Spritzmundstückzes untergebracht sind.

Fig.1

Fig. 2

Fig. 3

0 078 213

Fig. 4

Fig. 5